# DEMANDE DE BREVET EUROPEEN

(11) **EP 2 374 690 A1**
(43) Date de publication de la demande: **12.10.2011**
(21) Numéro de dépôt: 11156231.0
(22) Date de dépôt: 28.02.2011
(51) Int. Cl.: B62D 1/04

(54) **Volant ergonomique de conduite d'un véhicule automobile sans colonne de direction**

(30) Priorité: 06.04.2010 FR 1052551
(71) Demandeur: Akka Ingenierie Produit, 92300 Levallois-Perret (FR)
(72) Inventeur: Ricci, Maurice, 69002, Lyon (FR); Degosse, Frank, 59000, Lille (FR)
(74) Mandataire: Gaillarde, Frédéric F. Ch.

(57) **Abrégé**

Ce volant de conduite d'un véhicule automobile sans colonne de direction, comprend :
- un corps central (1),
- deux branches (5a, 5b) de préhension reliées à ce corps central (1), disposées de part et d'autre de celui-ci,
- au moins une palette d'accélération (9a, 9b) reliée à la face arrière dudit corps (1) et s'étendant entre ce corps et l'une desdites branches (9a, 9b), cette palette étant telle qu'une traction vers le conducteur permette de faire accélérer le véhicule, et
- au moins un bouton de freinage (7a, 7b) disposé sur la face avant d'au moins l'une desdites branches (5a, 5b), ce bouton (7a, 7b) étant tel qu'une pression exercée par le conducteur permette de freiner le véhicule.

Lesdites branches de préhension (5a, 5b), ladite palette (9a, 9b) et ledit bouton (7a, 7b) sont disposés de manière que lorsque le conducteur tient lesdites branches (5a, 5b) avec ses mains, il ait au moins l'un de ses pouces qui vienne se positionner naturellement sur ledit bouton (7a, 7b), et ses autres doigts sur la face arrière de ladite palette (9a, 9b).

## Description

Volant ergonomique de conduite d'un véhicule automobile sans colonne de direction.

On connaît de la technique antérieure le principe des véhicules sans colonne de direction : on parle souvent de véhicules du type « drive-by-wire », c'est-à-dire de véhicules dans lesquels la liaison entre le volant de conduite et les roues comprend une partie de transmission purement électrique.

L'absence de colonne de direction permet de gagner notamment en poids et en encombrement.

La présente invention a pour but de fournir un volant de conduite pour ce type de véhicule, qui présente une ergonomie particulièrement satisfaisante.

On atteint ce but de l'invention avec un volant de conduite d'un véhicule automobile sans colonne de direction, comprenant :
- un corps central,
- deux branches de préhension reliées à ce corps central, disposées de part et d'autre de celui-ci,
- au moins une palette d'accélération reliée à la face arrière dudit corps et s'étendant entre ce corps et l'une desdites branches, cette palette étant telle qu'une traction vers le conducteur permette de faire accélérer le véhicule, et
- au moins un bouton de freinage disposé sur la face avant d'au moins l'une desdites branches, ce bouton étant tel qu'une pression exercée par le conducteur permette de freiner le véhicule,
lesdites branches de préhension, ladite palette et ledit bouton étant disposés de manière que lorsque le conducteur tient lesdites branches avec ses mains, il ait au moins l'un de ses pouces qui vienne se positionner naturellement sur ledit bouton, et ses autres doigts sur la face arrière de ladite palette.

Grâce à ces caractéristiques, un conducteur qui tient le volant selon l'invention voit les doigts de sa main se positionner spontanément en face des commandes d'accélération et de freinage.

Le fait de prévoir que les palettes d'accélération soient actionnées par traction vers le conducteur, reproduit la sensation selon laquelle le conducteur a tendance à s'éloigner du volant pour être plaqué au fond de son siège, lors d'un freinage.

De même, le fait de prévoir que les boutons de freinage soient actionnés en poussant sur le volant, reproduit la sensation selon laquelle le conducteur a tendance à être plaqué contre son volant, lors d'un freinage.

L'actionnement des palettes d'accélération et des boutons de freinage devient ainsi très intuitif, c'est-à-dire d'une utilisation très naturelle.

A noter que la forme particulière du volant selon l'invention le destine à un véhicule sans colonne de direction : le débattement angulaire d'un tel volant ne peut en effet dépasser une certaine limite, située typiquement entre 45° et 90° de chaque côté de sa position neutre (correspondant aux roues directrices droites), faute de quoi le conducteur pourra difficilement accéder aux commandes d'accélération et de freinage.

Suivant d'autres caractéristiques optionnelles du volant selon l'invention :
- ce volant comprend deux palettes d'accélération situées de part et d'autre dudit corps central, et un bouton de freinage situé sur chacune desdites branches : la présence de ces deux palettes et de ces deux boutons augmente la facilité d'accès aux commandes d'accélération et de freinage ;
- lesdites palettes comportent chacune un doigt d'actionnement sur un manchon commun agissant sur deux potentiomètres disposés en vis-à-vis ;
- lesdites branches forment un V l'une par rapport à l'autre : cette inclinaison des deux branches correspond à la position naturelle des deux paumes des mains d'un conducteur qui tend les bras devant lui ;
- lesdites branches définissent chacune un arc de cercle ;
- lesdits boutons de freinage sont des molettes montées rotatives aux extrémités desdites branches, agissant chacune sur un potentiomètre monté fixe à chacune desdites extrémités ;
- ledit corps central comprend un écran d'affichage : ceci permet d'afficher des informations (vitesse, niveau d'essence...) utiles pour la conduite du véhicule.

La présente invention se rapporte également à un ensemble de direction sans colonne de direction pour véhicule automobile, comprenant :
- un volant conforme à ce qui précède, apte à pivoter d'au plus 90° de part et d'autre de sa position neutre,
- des moyens électriques d'orientation des roues directrices du véhicule, et
- des moyens pour commander ces moyens électriques en fonction de l'orientation du volant,
lesdits moyens de commande étant tels que la rotation du volant avant qu'il n'arrive en butée a pour effet de faire pivoter lesdites roues dans une plage d'angles inférieure à une valeur prédéterminée, et le maintien du volant en butée à pour effet d'augmenter l'angle de rotation desdites roues au-delà de ladite valeur prédéterminée, jusqu'à une valeur maximale.

Ces caractéristiques permettent d'éviter que la faible amplitude de rotation du volant entre ses butées gauche et droite (d'au plus 90° de part et d'autre de sa position neutre) n'entraîne une forte amplitude de rotation des roues, ce qui serait bien entendu dangereux à grande vitesse : pour obtenir une telle forte amplitude, notamment en vue de réaliser des manoeuvres, il faut insister en maintenant le volant en appui contre sa butée concernée, c'est-à-dire réaliser un acte intentionnel.

Suivant d'autres caractéristiques optionnelles de l'ensemble de direction selon l'invention :
- l'angle de pivotement dudit volant est d'au plus 60° de part et d'autre de position neutre : cette angle maximal de pivotement permet une préhension du volant et un accès aux commandes de freinage/accélération optimaux par le conducteur, sur toute la plage d'angles de rotation du volant ;
- ladite valeur prédéterminée d'angle de rotation desdites roues est comprise entre 10° et 15° : une telle valeur permet de conserver la tenue de route du véhicule y compris à grande vitesse.

D'autres caractéristiques et avantages de la présente invention apparaîtront à la lumière de la description qui va suivre, et à l'examen des figures ci-annexées, dans lesquelles :
- la figure1 est une vue en perspective d'un volant de conduite selon l'invention,
- la figure 2 est une vue de face de ce même volant, et
- la figure 3 est vue de face d'une autre forme de réalisation de ce volant, certaines parties étant représentées en transparence pour faciliter la compréhension.

Dans ce qui suit, on utilisera les termes « avant » et « arrière », ainsi que les termes « devant » et « derrière ».

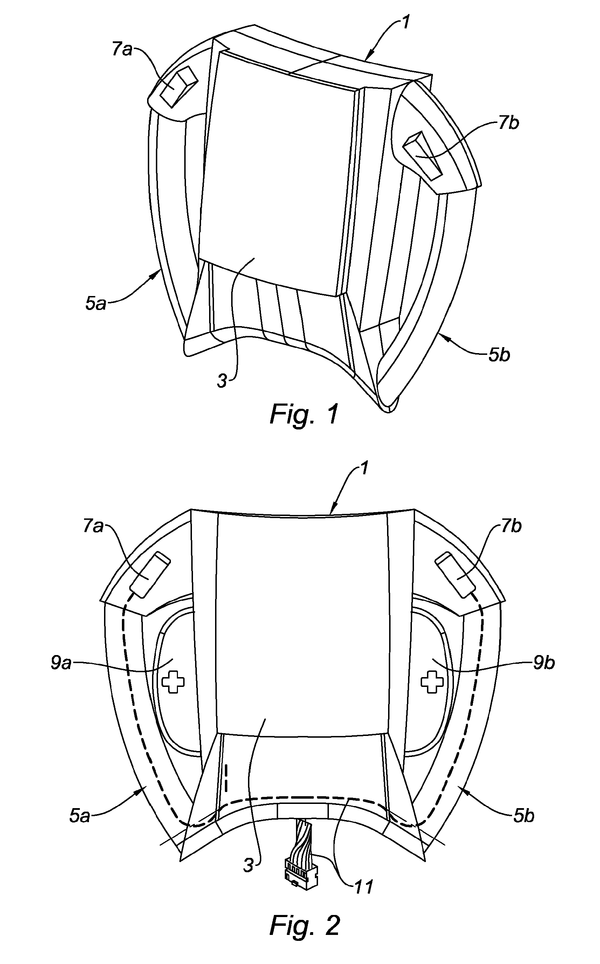

Ces termes doivent s'entendre par rapport à un conducteur situé en position de conduite : les termes « avant » et « devant » se rapportent à des parties du volant qui sont visibles du conducteur (ces parties étant également celles qui sont visibles sur les figures 1 à 3 ci-annexées), les termes « arrière » et « derrière » se rapportant à des parties du volant non visibles pour le conducteur, c'est-à-dire situées de l'autre côté du volant par rapport au conducteur.

Par ailleurs, sur l'ensemble de ces figures, des références identiques ou analogues désignent des organes ou ensembles d'organes identiques ou analogues.

Le volant selon l'invention comporte un corps 1 qui peut être par exemple de forme sensiblement parallélépipédique, comme cela est visible sur les figures, et qui peut comporter en son centre un tableau de bord 3, se présentant par exemple sous la forme d'un écran affichant des informations utiles pour la conduite : vitesse, niveau d'essence, etc.

De part et d'autre du corps 1, s'étendent deux branches 5a, 5b, orientées sensiblement l'une par rapport à l'autre en V, comme cela est visible notamment sur la figure 2.

Chaque branche 5a, 5b comporte, dans sa partie supérieure, c'est-à-dire dans sa partie destinée à se trouver vers le haut du volant lorsque celui est en place à l'intérieur d'un véhicule, un bouton poussoir respectif 7a, 7b.

D'autre part, deux palettes symétriques 9a, 9b, c'est-à-dire deux actionneurs de forme sensiblement plate, sont fixées à l'arrière du corps 1, et s'étendent ente ce corps et les branches respectives 5a, 5b.

Ces palettes 9a, 9b sont actionnables par traction vers l'avant du volant.

Les boutons 7a, 7b et les palettes 9a, 9b sont destinés à être reliés par un faisceau de câbles électriques 11 au calculateur électronique du véhicule automobile sur lequel ce volant est destiné à être installé.

Plus particulièrement, ce volant est destiné à faire partie d'un ensemble de direction du type sans colonne de direction, c'est-à-dire du type dans lequel la commande d'orientation des roues directrices du véhicule est transmise depuis le volant par des moyens purement électriques.

Un tel volant est particulièrement adapté à une telle application, souvent désignée « drive-by-wire », étant donné qu'il ne peut présenter un déplacement angulaire que relativement faible de part et d'autre de sa position neutre (correspondant à l'alignement des roues du véhicule dans l'axe de celui-ci).

Plus spécifiquement, on prévoit dans le cadre de la présente invention que le volant ne peut dépasser 90° de part et d'autre de sa position neutre, et de préférence 60° de part et d'autre de cette position.

Dans cette plage de rotation, le volant selon l'invention peut être parfaitement saisi par un conducteur, qui pose les paumes de ses mains sur chacune des deux branches 5a, 5b, ses pouces venant alors naturellement en regard des boutons 7a, 7b, et les autres doigts de ses mains venant naturellement derrière les palettes 9a et 9b.

Pour piloter le véhicule automobile, le conducteur accélère en tirant au moins l'une des deux palettes 9a, 9b, et il freine en poussant sur au moins l'un des deux boutons 7a, 7b.

Tant que le volant est situé entre ses butées droite et gauche (autoriisant donc une rotation de 60° du volant de part et d'autre de sa position neutre), on prévoit que la rotation correspondante des roues directrices du véhicule soit située dans une plage de 0 à 15°, et de préférence de 0 à 10°, par rapport à la position d'alignement de ces roues avec l'axe du véhicule.

Ceci permet d'éviter qu'une mise en rotation du volant, lequel est en l'occurrence faiblement démultiplié par rapport à la rotation des roues, entraîne une mise en rotation trop importante de ces dernières, ce qui pourrait provoquer des embardées très dangereuses du véhicule, notamment lorsque celui-ci roule à grande vitesse.

Lorsqu'on souhaite dépasser cette valeur prédéterminée de 10° ou 15° d'angle de rotation des roues directrices, notamment pour manoeuvrer le véhicule en vue de son stationnement, on maintient le volant contre sa butée droite ou gauche, et tant que ce maintien est effectué, les roues directrices continuent de pivoter progressivement au-delà de ladite valeur d'angle prédéterminée.

Bien entendu, on peut prévoir que cette commande d'angle de rotation supplémentaire obtenue par maintien du volant contre l'une de ces butées, ne soit permise que lorsque le véhicule circule en dessous d'une vitesse prédéterminée, voire même uniquement lorsque le véhicule est à l'arrêt.

Suivant d'autres scénarios possibles, on peut prévoir que la valeur d'angle prédéterminée susmentionnée soit fonction de la vitesse du véhicule : valeur d'angle relativement faible lorsque le véhicule circule rapidement, et valeur d'angle relativement importante lorsque le véhicule circule lentement.

Bien entendu, et bien que cela ne soit pas représenté sur les figures ci-annexées, il faut comprendre que l'ensemble de direction comprenant le volant susmentionné ainsi que les moyens électriques d'orientation des roues directrices du véhicule, comprend également une électronique de commande permettant de mettre en oeuvre les stratégies susmentionnées.

Comme on l'aura compris à la lumière de la description qui précède, le volant qui vient d'être décrit fournit une ergonomie particulièrement satisfaisante.

En effet, les deux branches 5a, 5b permettent le positionnement des deux mains du conducteur dans une configuration naturelle, correspondant à l'orientation de ses mains lorsque le conducteur tend ses bras vers l'avant.

Le bouton poussoir 7a, 7b et les palettes 9a, 9b se trouvent alors en regard des positions naturelles respectives des pouces du conducteur et des quatre autres doigts de ses mains.

Le fait de pousser sur les boutons 7a, 7b pour freiner reproduit le mouvement d'avancement du corps vers le volant en situation de freinage.

Le fait de tirer sur les palettes 9a, 9b pour accélérer reproduit le mouvement du corps du conducteur vers le fond de sons siège, correspondant aux situations d'accélération.

Bien entendu, l'invention n'est nullement imitée aux modes de réalisation décrits et représentés, fournis à titre de simples exemples.

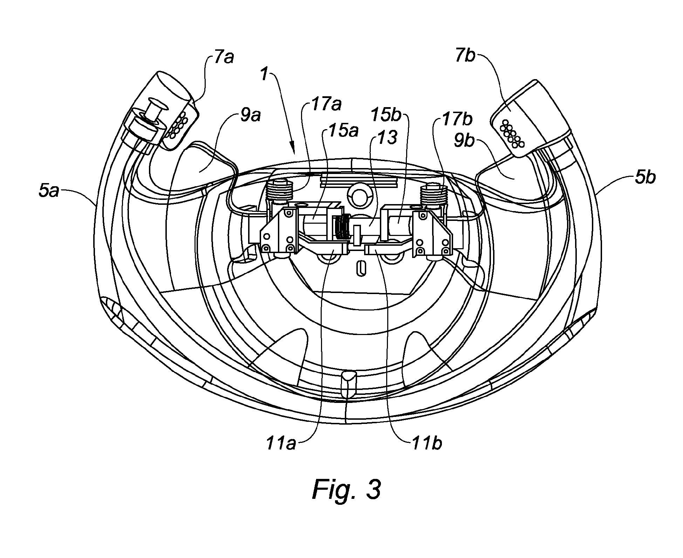

C'est ainsi par exemple que l'on a représenté à la figure 3 une autre forme de réalisation du volant selon l'invention.

Dans cette autre forme, les deux branches 5a et 5b définissent chacune un arc de cercle, et sont reliées l'une à l'autre.

Les palettes 9a, 9b comportent chacune un doigt d'actionnement 11 a, 11 b apte à faire pivoter un manchon commun 13 agissant sur deux potentiomètres 15a, 15b disposés en vis-à-vis.

Des ressorts 17a, 17b sont prévus pour assurer le rappel des palettes 9a, 9b vers leur position initiale, à l'encontre des efforts de traction exercés par le conducteur.

Dans la forme de réalisation de la figure 3, les boutons de freinage 7a, 7b sont des molettes montées rotatives aux extrémités des branches 5a, 5b, agissant chacune sur un potentiomètre monté fixe à chacune de ces extrémités.

Comme pour les palettes 9a, 9b, des ressorts sont prévus pour assurer le rappel de ces molettes vers leur position initiale, à l'encontre des efforts de poussée exercés par le conducteur.

Typiquement, l'ensemble des potentiomètres susmentionnés ont une course en rotation de l'ordre de 60 degrés.

## Revendications

1. Volant de conduite d'un véhicule automobile sans colonne de direction, comprenant :
- un corps central (1),
- deux branches (5a, 5b) de préhension reliées à ce corps central (1), disposées de part et d'autre de celui-ci,
- au moins une palette d'accélération (9a, 9b) reliée à la face arrière dudit corps (1) et s'étendant entre ce corps et l'une desdites branches (9a, 9b), cette palette étant telle qu'une traction vers le conducteur permette de faire accélérer le véhicule, et
- au moins un bouton de freinage (7a, 7b) disposé sur la face avant d'au moins l'une desdites branches (5a, 5b), ce bouton (7a, 7b) étant tel qu'une pression exercée par le conducteur permette de freiner le véhicule,
lesdites branches de préhension (5a, 5b), ladite palette (9a, 9b) et ledit bouton (7a, 7b) étant disposés de manière que lorsque le conducteur tient lesdites branches (5a, 5b) avec ses mains, il ait au moins l'un de ses pouces qui vienne se positionner naturellement sur ledit bouton (7a, 7b), et ses autres doigts sur la face arrière de ladite palette (9a, 9b).

2. Volant de conduite selon la revendication 1, comprenant deux palettes d'accélération (9a, 9b) situées de part et d'autre dudit corps central (1), et un bouton de freinage (7a, 7b) situé sur chacune desdites branches (5a, 5b).

3. Volant de conduite selon l'une des revendications 1 ou 2, **caractérisé en ce que** lesdites palettes (9a, 9b) comportent chacune un doigt d'actionnement (11a, 11 b) sur un manchon commun agissant sur deux potentiomètres (15a, 15b) disposés en vis-à-vis.

4. Volant de conduite selon l'une quelconque des revendications précédentes, dans lequel lesdites branches (5a, 5b) forment un V l'une par rapport à l'autre.

5. Volant de conduite selon l'une quelconque des revendications 1 à 3, **caractérisé en ce que** lesdites branches (5a, 5b) définissent chacune un arc de cercle.

6. Volant de conduite selon l'une quelconque des revendications précédentes, **caractérisé en ce que** lesdits boutons de freinage sont des molettes montées rotatives aux extrémités desdites branches (5a, 5b), agissant chacune sur un potentiomètre monté fixe à chacune desdites extrémités.

7. Volant selon l'une quelconque des revendications précédentes, dans lequel ledit corps central (1) comprend un écran d'affichage (3).

8. Ensemble de direction sans colonne de direction pour véhicule automobile, comprenant :
- un volant conforme à l'une quelconque des revendications précédentes, apte à pivoter d'au plus 90° de part et d'autre de sa position neutre,
- des moyens électriques d'orientation des roues directrices du véhicule, et
- des moyens pour commander ces moyens électriques en fonction de l'orientation du volant,
lesdits moyens de commande étant tels que la rotation du volant avant qu'il n'arrive en butée a pour effet de faire pivoter lesdites roues dans une plage d'angles inférieure à une valeur prédéterminée, et le maintien du volant en butée à pour effet d'augmenter l'angle de rotation desdites roues au-delà de ladite valeur prédéterminée, jusqu'à une valeur maximale.

9. Ensemble de direction selon la revendication 8, dans lequel l'angle de pivotement dudit volant est d'au plus 60° de part et d'autre de position neutre.

10. Ensemble de direction selon l'une des revendications 8 ou 9, dans lequel ladite valeur prédéterminée d'angle de rotation desdites roues est comprise entre 10° et 15°.
